# EUROPÄISCHE PATENTSCHRIFT

(11) **EP 2 754 913 B1**
(45) Veröffentlichungstag und Bekanntmachung des Hinweises auf die Patenterteilung: **15.04.2020**
(21) Anmeldenummer: 13196367.0
(22) Anmeldetag: 10.12.2013
(51) Int. Cl.: F16D 65/18, F16D 125/70, F16D 125/28

(54) **Scheibenbremse für Fahrzeuge**
Disc brake for vehicles
Frein à disques pour véhicules

(30) Priorität: 14.01.2013 DE 102013100337; 19.02.2013 DE 102013101636
(43) Veröffentlichungstag der Anmeldung: 16.07.2014
(73) Patentinhaber: BPW Bergische Achsen KG, 51674 Wiehl (DE)
(72) Erfinder: Neumann, Arthur, 51597 Morsbach (DE); Dowe, Günter, 51588 Nümbrecht-Gaderoth (DE); Dowe, Andreas, 51588 Nümbrecht (DE); Pehle, Michael, 51371 Leverkusen (DE); Abt, Christian, 51643 Gummersbach (DE); Schwarz, Michael, 51469 Bergisch Gladbach (DE)
(74) Vertreter: Christophersen Patentanwälte

(56) Entgegenhaltungen:
- EP-A1- 1 441 142
- EP-A2- 1 160 476
- DE-A1-102006 007 684
- DE-A1-102007 001 378
- US-A1- 2006 124 405

## Beschreibung

Die Erfindung betrifft eine Scheibenbremse für Fahrzeuge, vorzugsweise für Schwerlast-Nutzfahrzeuge, nach dem Oberbegriff des Patentanspruchs 1.

Eine Scheibenbremse für den Einsatz in Schwerlast-Nutzfahrzeugen ist z. B. aus der EP 1 748 210 B1 bekannt. Bestandteile der Scheibenbremse sind ein eine Bremsscheibe übergreifender Bremssattel, eine Zuspanneinheit, eine Nachstelleinrichtung zum Einstellen des Lüftspiels sowie eine im Kraftfluss der Zuspanneinheit angeordnete, beweglich in dem Bremssattel angeordnete Traverse. Die Traverse überträgt die Zuspannkraft auf zwei Druckstempel, die gegen einen Bremsbelag der Scheibenbremse arbeiten. Zur Erzielung einer größeren Druckfläche zwischen dem Druckstempel und der Rückseite des Bremsbelags ist der Druckstempel an seinem Ende als radial vergrößerter Druckteller gestaltet, der sich mit einer entsprechend großen Druckfläche an dem Bremsbelag abstützt.

Wegen des radial vergrößerten Drucktellers kann es im Zusammenhang mit dem Austausch von Verschleiß- oder Abnutzungsteilen zu einem erhöhten Montage- bzw. Demontageaufwand kommen. Zu den Verschleiß- bzw. Abnutzungsteilen gehören Dichtungselemente wie z. B. Faltenbalgdichtungen, welche den Druckstempel gegenüber dem Bremsgehäuse abdichten.

Eine Scheibenbremse mit den Merkmalen des Oberbegriffs ist aus der US 2006/0124405 A1 bekannt. Innerhalb eines die Bremsscheibe der Scheibenbremse übergreifenden Bremssattels wird die Zuspannkraft über einen Druckstempel übertragen, der in Richtung auf den Bremsbelag der Scheibenbremse arbeitet. Jedoch liegt der Druckstempel nicht direkt gegen den Bremsbelag an, sondern er ist in seinem vorderen Bereich als Zapfen ausgebildet, auf dem ein radial größerer Druckteller in der Gestalt einer Lochscheibe sitzt. Die Kraftübertragung auf den Bremsbelag erfolgt über die so deutlich vergrößerte Fläche an dem Druckteller, der außerdem mit einer hitzeisolierenden Beschichtung versehen ist.

Aus der EP 1 441 142 A1 ist in verschiedenen Ausführungsformen eine Scheibenbremse mit doppelten Druckstempeln bekannt. Bei einer Ausführungsform ist der Druckstempel, dem Bremsbelag zugewandt, mit einem Zapfen versehen, der in eine entsprechende Ausnehmung in der Rückenplatte des Bremsbelags eingreift. Zur Erhöhung der Druckfestigkeit ist die Rückenplatte mit massiven Erhebungen versehen, um so die Kraft des Druckstempels besser in die Reibbeläge des Bremsbelags zu übertragen.

Auch bei einer Scheibenbremse gemäß der DE 10 2007 001 378 A1 ist die Rückenplatte des Bremsbelags partiell dort verstärkt, wo die Kräfte zweier Druckstempel übertragen werden. In diese Bereiche der Rückenplatte sind zusätzlich Isolationselemente eingelassen, gegen die die zylindrisch gestalteten Druckstempel arbeiten. Die Isolationselemente reduzieren den Wärmeübergang.

Weitere Scheibenbremsen, bei denen Druckstempel gegen zumindest einen Bremsbelag der Scheibenbremse arbeiten, sind aus der DE 10 2006 007 684 A1 und der EP 1 160 476 A2 bekannt.

Ziel der Erfindung ist eine Reduzierung des im Zusammenhang mit dem Austausch von Verschleiß- oder Abnutzungsteilen anfallenden Montage- bzw. Demontageaufwandes an der Scheibenbremse.

Zur Lösung dieser Aufgabe wird eine Scheibenbremse mit den Merkmalen des Patentanspruchs 1 vorgeschlagen.

Indem der Druckteller als Lochscheibe ausgebildet ist, die mit ihrem vorzugsweise zentral angeordneten Loch auf einem an dem Druckstempel, dem Bremsbelag zugewandt, ausgebildeten Zapfen sitzt und diesem gegenüber axial gesichert ist, lässt sich der Druckteller mit geringem Aufwand entfernen. Erreicht wird so eine Verringerung des im Zusammenhang mit dem Austausch von Verschleiß- oder Abnutzungsteilen anfallenden Montage- bzw. Demontageaufwandes an der Scheibenbremse. Zu diesen häufiger auszutauschenden Teilen zählt insbesondere die Abdichtung zwischen Druckstempel und Bremssattel bzw. Bremssattelgehäuse, welche Abdichtung häufig als Faltenbalg ausgebildet ist. Zur Erzielung einer seitlichen Führung des Druckstempels weist der Zapfen einen über die Druckfläche des Drucktellers hinausragenden Längsabschnitt auf. Dieser kann in eine entsprechend gestaltete Öffnung oder Ausnehmung des Bremsbelags eingreifen.

Gemäß einer bevorzugten Ausgestaltung erfolgt die axiale Sicherung des Drucktellers vollständig oder teilweise durch einen Sicherungsring, der in einer Ringnut des Zapfens sitzt und einer stirnseitigen Sicherungsring-Anlagefläche des Drucktellers gegenüberliegt. Hierbei ist von zusätzlichem Vorteil, wenn die Sicherungsring-Anlagefläche im Vergleich zu der Druckfläche des Drucktellers rückspringend gestaltet ist.

Bei einer alternativen Ausgestaltung erfolgt die axiale Sicherung des Drucktellers vollständig oder teilweise durch einen Presssitz zwischen Druckteller und Zapfen.

Bei einer weiteren alternativen Ausgestaltung erfolgt die axiale Sicherung des Drucktellers vollständig oder teilweise durch eine Gewindeverbindung zwischen dem Druckteller und dem Zapfen.

Der Zapfen ist entweder einstückig als radial verkleinerter Endabschnitt des Druckstempels ausgebildet, oder er ist an einem in dem Grundkörper des Druckstempels befestigten, separaten Bauteil ausgebildet.

Die Erfindung wird im Folgenden anhand der beigefügten Zeichnung näher erläutert. Darin zeigen:
- Fig. 1: einen Längsschnitt durch eine Doppelstempel-Scheibenbremse, wobei die Bauteile, welche die Zuspanneinheit der Scheibenbremse bilden, nur schematisch wiedergegeben sind;
- Fign. 2a - 2c: ein mehrteilig aufgebauter Druckstempel in verschiedenen Phasen seines Zusammenbaus;
- Fig.3: eine gegenüber den Fign. 2a - 2c alternative Ausgestaltung des Druckstempels, wobei nur der der Bremsscheibe zugewandte Abschnitt des Druckstempels dargestellt ist;
- Fig. 4: eine weitere, gegenüber den Fign. 2a - 2c alternative Ausgestaltung des Druckstempels, wobei nur der der Bremsscheibe zugewandte Abschnitt des Druckstempels dargestellt ist;
- Fign. 5a - 5c: eine Ausgestaltung des Druckstempels mit rohrförmigem Grundkörper in verschiedenen Phasen seines Zusammenbaus;
- Fig. 6: eine weitere Ausführungsform eines Druckstempels mit rohrförmigem Grundkörper, wobei die Wandstärke des Rohrs teilweise verdickt ist;
- Fig. 7: eine im Vergleich zu Fig. 6 im Bereich der Verdickung modifizierte Ausgestaltung des Druckstempels und
- Fig. 8: eine im Vergleich zu Fig. 6 und Fig. 7 im Bereich der Verdickung modifizierte Ausgestaltung des Druckstempels.

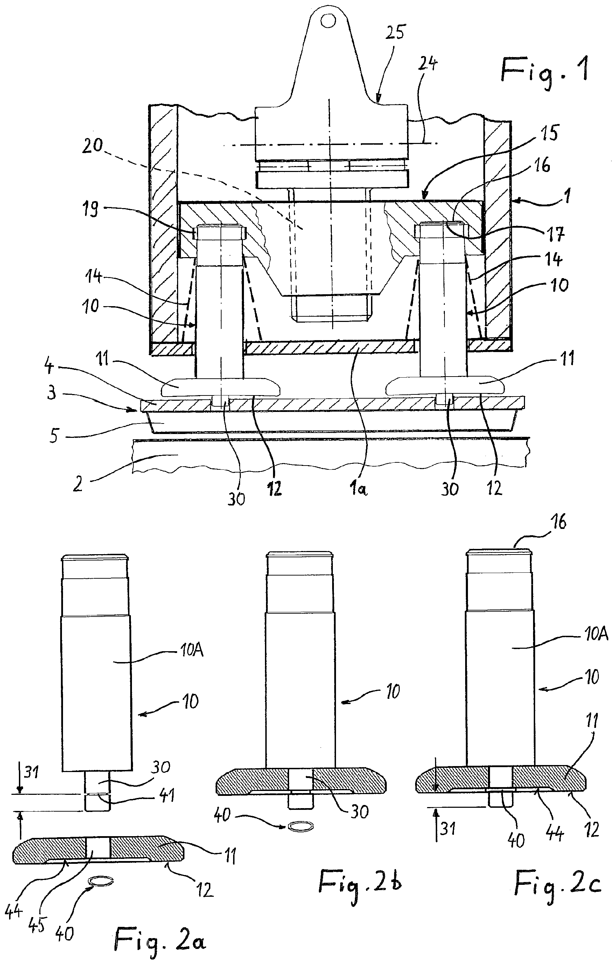

Die hier beschriebene Scheibenbremse dient dem Einsatz in Schwerlast-Nutzfahrzeugen. Sie ist vom Gleitsattel- bzw. Schwimmsattel-Bautyp, d. h. sie besteht aus einem achsfest montierten Bremsträger und einem in Achsrichtung verschiebbar an dem Bremsträger geführten Bremssattel 1, von dem in Fig. 1 ein Teil des Bremssattelgehäuses wiedergegeben ist. Insgesamt ist der Bremssattel rahmenförmig gestaltet und er übergreift eine Bremsscheibe 2 gegen die von jeder Seite her jeweils ein Bremsbelag 3 arbeitet. In Fig. 1 dargestellt ist nur der zuspannseitige Bremsbelag 3. Der andere Bremsbelag ist auf der anderen Seite der Bremsscheibe 2 im Bremssattel oder im Bremsträger festgelegt. Jeder Bremsbelag 3 besteht aus einer starren Belagträgerplatte 4 und dem eigentlichen Reibbelag 5.

Bei der Bremszuspannung wird der Reibbelag 5 des Bremsbelags 3 gegen die Bremsscheibe 2 gedrückt, wobei die am Bremssattel 1 entstehende Reaktionskraft über den Bremssattel zum Anlegen des anderen Bremsbelags von der anderen Seite her gegen die Bremsscheibe 2 führt.

Der Druck auf den Bremsbelag 3 erfolgt bei den hier beschriebenen Ausführungsbeispielen durch einen Zweifachstempel, also durch zwei parallel zueinander angeordnete Druckstempel 10. Die Anzahl der Druckstempel 10 kann auch geringer oder größer sein. Jeder Druckstempel 10 ist durch einen ihn umgebenden Faltenbalg 14 gegenüber dem Sattelgehäuse 1 abgedichtet.

Der Druckstempel 10 erstreckt sich durch eine Öffnung in einer Gehäuseplatte 1a, die lösbar am Bremssattelgehäuse 1 befestigt ist und das Bremssattelgehäuse 1 zu der Bremsscheibe 2 hin verschließt. Die Gehäuseplatte 1a muss für einen Austausch der Faltenbälge 14 demontiert werden.

Der Druckstempel 10 stützt sich mit einer an einem radial größeren Druckteller 11 ausgebildeten Druckfläche 12 unmittelbar gegen die Rückseite der Belagträgerplatte 4 ab, und überträgt so die Zuspannkraft auf den Bremsbelag.

Die beim Ausführungsbeispiel zwei Druckstempel 10 sind mit einer gemeinsamen, nach Art eines Jochs gestalteten Traverse 15 verbunden und sitzen hierzu in Sacklöchern der Traverse 15. Diese verfügt über einen ersten Arm, in dem der erste Druckstempel 10 sitzt, und über einen zweiten Arm, in dem der zweite Druckstempel 10 sitzt. Auf diese Weise verteilt die Traverse 15 die Zuspannkraft gleichmäßig auf die zwei Druckstempel 10.

Der zylindrische Grundkörper 10A des Druckstempels stützt sich mit seiner der Bremsscheibe 2 abgewandten, kreisförmigen Stirnfläche 16 gegen den Boden 17 des Sacklochs in der Traverse 15 ab. Zur axialen Lagesicherung des Druckstempels kann zwischen dem Sackloch und dem Druckstempel ein Haltering 19 angeordnet sein. Alternativ besteht auch die Möglichkeit, den Druckstempel 10 unlösbar mit der Traverse 15 zu verbinden, oder aber den Druckstempel bzw. die Druckstempel als einstückige Bestandteile der Traverse 15 auszubilden.

In der Mitte der Traverse 15 und damit auf deren Symmetrieachse stützt sich ein Gewinderohr 20 gegen die Traverse 15 ab. Das Gewinderohr 20 ist Bestandteil einer Nachstelleinrichtung und weist ein Außengewinde 21 auf, welches in ein entsprechendes Innengewinde 22 der Traverse 15 eingreift. Durch Verdrehen des Gewinderohrs 20 kommt es daher zu einer axialen Verlagerung der Traverse 15. Zum Verdrehen des Gewinderohrs 20 kommt es im Rahmen der Nachstellung der Scheibenbremse. Hierzu ist, vorzugsweise in einem Hohlraum in dem Gewinderohr 20, eine Nachstelleinrichtung angeordnet. Die Nachstelleinrichtung führt zu einem Ausgleich des sich mit zunehmendem Bremsbelagverschleiß vergrößernden Lüftspiels, d. h. des Abstandes zwischen Reibbelag 5 und Bremsscheibe 2 bei nicht betätigter Bremse. Mit fortschreitendem Verschleiß der Reibbeläge bewirkt die Nachstelleinrichtung ein sukzessives Verdrehen des Gewinderohrs 20, wodurch die Traverse 15 einschließlich der Druckstempel 10 sukzessive in Richtung zu der Bremsscheibe 2 hin verlagert wird.

Zur Bereitstellung und Übertragung der Brems-Zuspannkraft sind weitere Bestandteile der Zuspanneinheit ein auf einer Achse 24 im Bremssattelgehäuse 1 gelagerter und mit einem Exzenter mittelbar oder unmittelbar gegen das Gewinderohr 20 der Nachstelleinrichtung arbeitender Schwenkhebel 25, sowie ein gegen den Hebelarm des Schwenkhebels 25 arbeitendes Arbeitsorgan, z. B. ein pneumatischer Betätigungszylinder.

Der Druckstempel 10 besteht jeweils aus einem zylinderförmigen Schaft 10A und einem sich in axialer Richtung an den Schaft 10A einstückig anschließenden und koaxialen Zapfen 30. Der Zapfen 30 weist gegenüber dem Schaft 10A einen geringeren Durchmesser auf. Auf jedem Zapfen 30 sitzt ein als Druckteller 11 ausgebildeter Stützfuß in Gestalt einer Lochplatte mit zentraler Durchtrittsöffnung für den Zapfen 30. Dadurch, dass die Länge des Zapfens 30 größer als die Dicke des Stützfußes ist, ragt der Zapfen 30 auf der anderen, der Bremsscheibe 2 zugewandten Stirnseite auf einem Längsabschnitt 31 ein Stück weit aus dem Stützfuß heraus. Diese Stirnseite bildet eine Druckfläche 12 zur Übertragung der Zustellkraft der Scheibenbremse auf den Bremsbelag.

Der aus dem Druckteller 11, d. h. dem Stützfuß herausragende Endbereich 31 des Zapfens 30 dient durch Eingriff in ein korrespondierend gestaltetes Sackloch in der Rückseite des Bremsbelags 3 der radialen Abstützung gegenüber dem Bremsbelag.

Der Druckstempel 10 ist, wie auch die verschiedenen Stadien seines Zusammensetzens in den Figuren 2a - 2c zeigen, mehrteilig ausgebildet. Er setzt sich zumindest aus dem in etwa zylindrischen Grundkörper 10A und dem separaten Druckteller 11 zusammen, an welchem die im Vergleich zum Durchmesser des Grundkörpers 10A radial größere Druckfläche 12 ausgebildet ist. Der Druckteller 11 ist als Lochscheibe ausgebildet, die mit ihrem zentral angeordneten Loch 45 auf dem fest an dem Grundkörper, dem Bremsbelag 3 zugewandt, angeordneten Zapfen 30 sitzt, und dem Zapfen 30 gegenüber axial gesichert ist.

Bei allen zeichnerisch dargestellten Ausführungsformen erfolgt die Sicherung des Drucktellers 11 an dem Zapfen 30 des Grundkörpers 10A durch einen Sicherungsring 40, der in einer Ringnut 41 auf etwa halber Länge des Zapfens 30 sitzt. Der Sicherungsring 40 liegt bei fertig montiertem Druckstempel, wie dies Fig. 2c wiedergibt, einer stirnseitigen Sicherungsring-Anlagefläche 44 am Boden des Drucktellers 11 gegenüber. Die Sicherungsring-Anlagefläche 44 ist im Vergleich zu der Druckfläche 12 des Drucktellers 12 rückspringend gestaltet, so dass es zu keinem Kontakt des Sicherungsrings 40 mit der Belagträgerplatte 4 kommen kann.

Der Zapfen 30 ist von solcher Länge, dass er einen ersten, das Loch 45 durchdringenden Längsabschnitt sowie einen zweiten, über die Druckfläche 12 des Drucktellers 11 hinausragenden Längsabschnitt 31 aufweist. Bei montierten Bremsbelägen 3 ragt dieser Endbereich 31 in ein entsprechend gestaltetes Loch in der Belagträgerplatte 4.

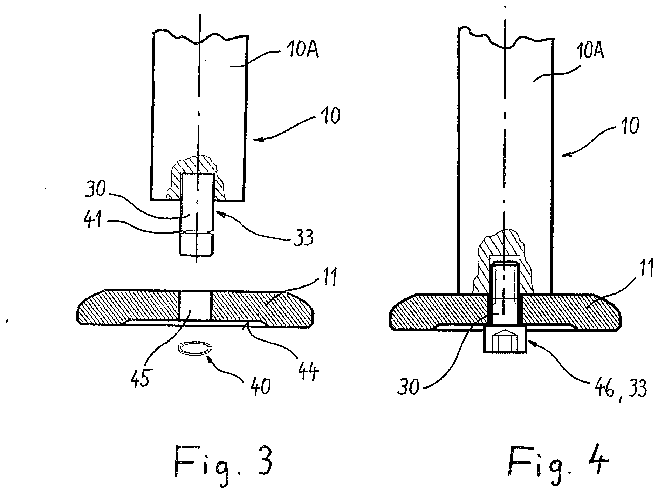

Gemäß Fig. 3 kann der Zapfen 30 auch an einem separaten Bauteil 33 ausgebildet sein, welches fest in einem Sackloch an der Stirnseite des Grundkörpers 10A sitzt.

Gemäß Fig. 4 kann der Zapfen 30 auch an einer Schraube 46 ausgebildet sein, welche mit ihrem Außengewinde in ein Gewindesackloch in dem Grundkörper 10A eingeschraubt ist.

Bei der Ausführungsform nach den Fign. 2a - 2c sowie bei den Ausführungsformen nach Fig. 3 und Fig. 4 ist der Grundkörper 10A des Druckstempels massiv, d.h. er besteht aus Vollmaterial. Insbesondere kann er auch einstückiger Bestandteil der Traverse 15 sein.

Demgegenüber zeigen die weiteren Ausführungsformen Druckstempel 10, bei denen aus Gründen der Gewichtsersparnis der Grundkörper 10A ein Hohlstempel und vorzugsweise ein zu beiden Enden hin offener Rohrstempel mit einheitlicher Wandstärke D1 oder mit uneinheitlicher Wandstärke D1, D2 ist.

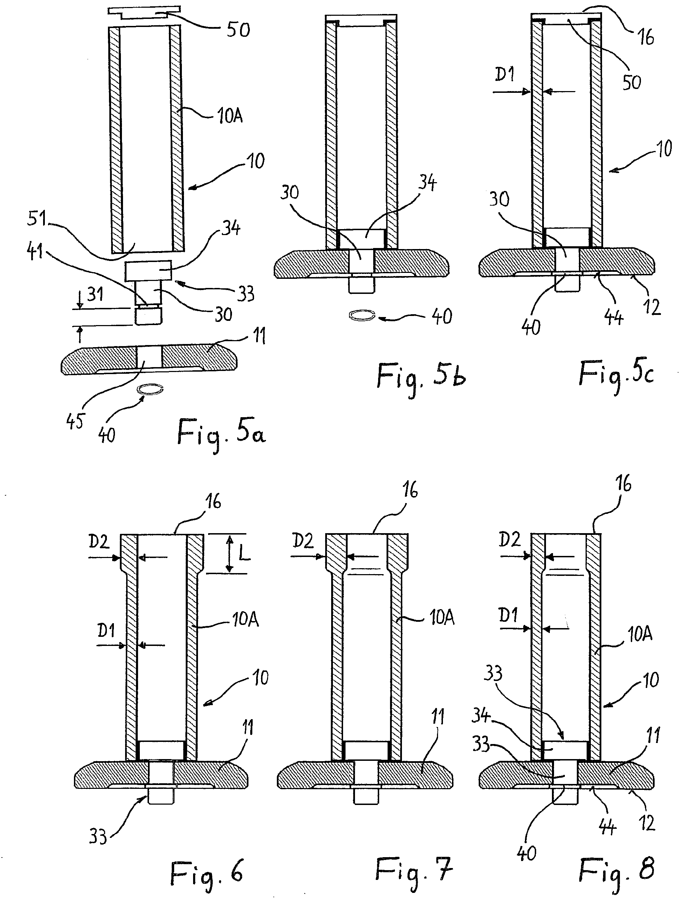

Bei der Ausführungsform nach den Fign. 5a - 5c ist der Rohrstempel zu der Traverse 15 hin durch eine stabile, zur Druckübertragung geeignete Platte 50 verschlossen. Die Platte 50 bedeckt die Stirnseite des Grundkörpers 10A und stellt eine relativ große Stirnfläche bereit, die sich am Boden 17 (Fig. 1) des Sacklochs der Traverse 15 abstützt. Am anderen Ende des Rohrstempels ist das den Zapfen 30 aufweisende Bauteil 33 befestigt. Hierzu ist ein radial vergrößerter Abschnitt 34 des Bauteils 33 fest in der zylindrischen Öffnung 51 des Rohrstempels verankert.

Bei den drei Ausführungsformen nach den Fign. 6 - 8 ist die reguläre Wanddicke D1 des rohrförmigen Grundkörpers 10A zumindest auf jener Länge L, auf der der Druckstempel in dem Sackloch der Traverse 15 sitzt, auf eine erhöhte Wanddicke D2 vergrößert. Auf diese Weise steht eine vergrößerte Stirnfläche 16 zur Verfügung, mit der sich der Druckstempel 10 am Boden 17 des Sacklochs der Traverse 15 abstützt (Fig. 1).

Für die Wanddickenvergrößerung D2 bestehen drei alternative Möglichkeiten. Bei Fig. 6 ist die Wanddickenvergrößerung eine Vergrößerung des Außendurchmessers des Rohrstempels bei gleichbleibendem Innendurchmesser. Bei Fig. 8 beruht die Wanddickenvergrößerung auf einer Reduzierung des Innendurchmessers des Rohrstempels bei gleichbleibendem Außendurchmesser. Bei Fig. 7 schließlich beruht die Wanddickenvergrößerung auf beidem, also auf einer Vergrößerung des Außendurchmessers und zugleich einer Reduzierung des Innendurchmessers des Grundkörpers 10A.

Die auf den Längsabschnitt L begrenzte Wanddickenvergrößerung von D1 auf D2 lässt sich durch axiales Stauchen des rohrförmigen Grundkörpers 10A in einer entsprechenden Umform-Matrize erreichen. Abhängig vom verwendeten Metallwerkstoff kann die Umformung eine Kaltumformung oder eine Warmumformung sein. Vorzugsweise wird nach dem Umformen die Mantelfläche auf dem Längsabschnitt L und auch die Stirnfläche 16 nachbearbeitet.

Am anderen Ende des Grundkörpers 10A ist wiederum das den Zapfen 30 aufweisende Bauteil 33 befestigt. Hierzu ist dessen radial vergrößerter Abschnitt 34 fest in der zylindrischen Öffnung des Rohrstempels verankert.

### Bezugszeichenliste

- 1: Bremssattel, Bremssattelgehäuse
- 1a: Gehäuseplatte
- 2: Bremsscheibe
- 3: Bremsbelag
- 4: Belagträgerplatte
- 5: Reibbelag
- 10: Druckstempel
- 10A: Grundkörper
- 11: Druckteller
- 12: Druckfläche
- 14: Faltenbalg
- 15: Traverse
- 16: Stirnfläche
- 17: Boden
- 19: Haltering
- 20: Gewinderohr
- 24: Achse
- 25: Schwenkhebel
- 30: Zapfen
- 31: Endbereich, Längsabschnitt des Zapfens
- 33: Bauteil
- 34: Abschnitt
- 40: Sicherungsring
- 41: Ringnut
- 44: Sicherungsring-Anlagefläche
- 45: Loch
- 46: Schraube
- 50: Platte
- 51: Öffnung

- D1: Wanddicke
- D2: Wanddicke
- L: Längsabschnitt

## Patentansprüche

1. Scheibenbremse für Fahrzeuge, vorzugsweise für Schwerlast-Nutzfahrzeuge, mit einem eine Bremsscheibe (2) übergreifenden Bremssattel (1), einer vorzugsweise pneumatisch angetriebenen Zuspanneinheit, einer Nachstelleinrichtung sowie einer im Kraftfluss der Zuspanneinheit angeordneten, beweglich in dem Bremssattel (1) angeordneten Traverse (15), welche die Zuspannkraft auf mindestens einen Druckstempel (10) überträgt, der gegen einen Bremsbelag (3) der Scheibenbremse arbeitet und sich hierbei über eine Druckfläche (12), die an einem gegenüber dem Druckstempel (10) radial größeren Druckteller (11) ausgebildet ist, axial an dem Bremsbelag (3) abstützt, wobei der Druckteller (11) als Lochscheibe ausgebildet ist, die mit ihrem vorzugsweise zentral angeordneten Loch (45) auf einem an dem Druckstempel (10), dem Bremsbelag (3) zugewandt, ausgebildeten Zapfen (30) sitzt und diesem gegenüber axial gesichert ist, **dadurch gekennzeichnet, dass** der Zapfen (30) einen ein Stück weit aus dem Druckteller (11) herausragenden Endbereich (31) aufweist.

2. Scheibenbremse nach Anspruch 1, **dadurch gekennzeichnet, dass** die axiale Sicherung des Drucktellers (11) vollständig oder teilweise durch einen Sicherungsring (40) erfolgt, der in einer Ringnut (41) des Zapfens (30) sitzt und einer stirnseitigen Sicherungsring-Anlagefläche (44) des Drucktellers (11) gegenüberliegt.

3. Scheibenbremse nach Anspruch 2, **dadurch gekennzeichnet, dass** die Sicherungsring-Anlagefläche (44) im Vergleich zu der Druckfläche (12) des Drucktellers (11) rückspringend gestaltet ist.

4. Scheibenbremse nach einem der vorangehenden Ansprüche, **dadurch gekennzeichnet, dass** die axiale Sicherung des Drucktellers (11) vollständig oder teilweise durch einen Presssitz zwischen Druckteller (11) und Zapfen (30) erfolgt.

5. Scheibenbremse nach einem der vorangehenden Ansprüche, **dadurch gekennzeichnet, dass** die axiale Sicherung des Drucktellers (11) vollständig oder teilweise durch eine Gewindeverbindung zwischen dem Druckteller (11) und dem Zapfen (30) erfolgt.

6. Scheibenbremse nach Anspruch 1, **dadurch gekennzeichnet, dass** der Zapfen (30) mit dem hinausragenden Endbereich (31) in eine entsprechend gestaltete Öffnung oder Ausnehmung des Bremsbelags (3) ragt.

7. Scheibenbremse nach einem der Ansprüche 1 - 6, **dadurch gekennzeichnet, dass** der Zapfen (30) einstückig als radial verkleinerter Endabschnitt des Druckstempels (10) ausgebildet ist.

8. Scheibenbremse nach einem der Ansprüche 1 - 6, **dadurch gekennzeichnet, dass** der Zapfen (30) Bestandteil eines in dem Druckstempel (10) befestigten, separaten Bauteils (33) ist.

## Claims

1. Disc brake for vehicles, preferably for heavy-load utility vehicles, with a brake calliper (1) engaging over a brake disc (2), a preferably pneumatically driven application unit, an adjustment device and a crossbar (15) which is arranged in the force flux of the application unit and is arranged movably in the brake calliper (1) and transmits the application force to at least one pressure plunger (10) which operates counter to a brake pad (3) of the disc brake and is supported here axially on the brake pad (3) via a pressure surface (12) which is formed on a pressure plate (11) which is larger radially than the pressure plunger (10), wherein the pressure plate (11) is in the form of a perforated disc which, with its preferably centrally arranged hole (45), sits on a pin (30) formed on the pressure plunger (10), facing the brake pad (3), and is secured axially in relation to the latter, **characterized in that** the pin (30) has an end region (31) protruding for a distance out of the pressure plate (11).

2. Disc brake according to Claim 1, **characterized in that** the pressure plate (11) is completely or partially secured axially by a securing ring (40) which sits in an annular groove (41) of the pin (30) and lies opposite an end-side securing-ring abutment surface (44) of the pressure plate (11).

3. Disc brake according to Claim 2, **characterized in that** the securing-ring abutment surface (44) is configured in a recessed manner in comparison to the pressure surface (12) of the pressure plate (11) .

4. Disc brake according to one of the preceding claims, **characterized in that** the pressure plate (11) is completely or partially secured axially by a press fit between pressure plate (11) and pin (30) .

5. Disc brake according to one of the preceding claims, **characterized in that** the pressure plate (11) is completely or partially secured axially by means of a threaded connection between the pressure plate (11) and the pin (30).

6. Disc brake according to Claim 1, **characterized in that** the pin (30) projects with the projecting end region (31) into a correspondingly configured opening or recess in the brake pad (3).

7. Disc brake according to one of Claims 1-6, **characterized in that** the pin (30) is formed integrally as a radially smaller end portion of the pressure plunger (10).

8. Disc brake according to one of Claims 1-6, **characterized in that** the pin (30) is part of a separate component (33) which is fastened in the pressure plunger (10).

## Revendications

1. Frein à disques pour véhicules, de préférence pour véhicules utilitaires poids-lourds, avec un étrier de frein (1) recouvrant un disque de frein (2), avec une unité d'application du frein entraînée de préférence de façon pneumatique, avec un dispositif de rattrapage de jeu ainsi qu'avec une traverse (15) disposée de façon mobile dans l'étrier de frein (1) dans le flux de puissance de l'unité d'application du frein, ladite traverse transmettant la force d'application du frein à au moins un piston-chasse (10) travaillant contre une garniture de frein (3) du frein à disques et butant ainsi dans le plan axial contre la garniture de frein (3) via une surface de pression (12) réalisée au niveau d'un plateau de pression (11) plus important dans le plan radial que le piston-chasse (10), le plateau de pression (11) étant réalisé sous la forme d'un disque troué qui repose avec son trou (45) disposé de préférence centralement sur un tenon (30) orienté vers la garniture de frein (3) au niveau du piston-chasse (10) et étant fixé par rapport à celui-ci dans le plan axial, **caractérisé en ce que** le tenon (30) comporte une zone d'extrémité (31) saillant en partie hors du plateau de pression (11).

2. Frein à disques selon la revendication 1, **caractérisé en ce que** la fixation axiale du plateau de pression (11) s'effectue entièrement ou en partie par l'intermédiaire d'une bague de fixation (40) reposant dans une rainure annulaire (41) du tenon (30) et opposée à une surface d'appui de bague de fixation (44), située du côté avant, du plateau de pression (11).

3. Frein à disques selon la revendication 2, **caractérisé en ce que** la surface d'appui de bague de fixation (44) est agencée à la façon d'un ressort de rappel par rapport à la surface de pression (12) du plateau de pression (11).

4. Frein à disques selon l'une quelconque des revendications précédentes, **caractérisé en ce que** la fixation axiale du plateau de pression (11) est réalisée entièrement ou en partie entre le plateau de pression (11) et le tenon (30), par le biais d'un siège de compression.

5. Frein à disques selon l'une quelconque des revendications précédentes, **caractérisé en ce que** la fixation axiale du plateau de pression (11) est réalisée entièrement ou en partie entre le plateau de pression (11) et le tenon (30), par le biais d'une liaison filetée.

6. Frein à disques selon la revendication 1, **caractérisé en ce que** le tenon (30) dépasse avec la zone d'extrémité (31) saillante dans une ouverture ou un évidement, réalisé de façon correspondante, de la garniture de frein (3).

7. Frein à disques selon l'une quelconque des revendications 1 à 6, **caractérisé en ce que** le tenon (30) est réalisé d'un seul tenant sous la forme d'une section d'extrémité, réduite dans le plan radial, du piston-chasse (10).

8. Frein à disques selon l'une quelconque des revendications 1 à 6, **caractérisé en ce que** le tenon (30) fait partie d'un composant séparé (33) fixé dans le piston-chasse (10).
